# EUROPEAN PATENT SPECIFICATION

(11) **EP 1 563 681 B1**
(45) Date of publication and mention of the grant of the patent: **21.04.2010**
(21) Application number: 03748477.1
(22) Date of filing: 15.10.2003
(51) Int. Cl.: H04N 7/16

(54) **APPARATUS AND METHOD TO PROVIDE A RECOMMENDATION OF CONTENT**
EMPFEHLUNGSVORRICHTUNG UND -VERFAHREN UM INHALTE ZU EMPFEHLEN
APPAREIL ET PROCEDE PERMETTANT DE FOURNIR UNE RECOMMANDATION DE CONTENU

(30) Priority: 08.11.2002 EP 02079682
(43) Date of publication of application: 17.08.2005
(73) Proprietor: Koninklijke Philips Electronics N.V., 5621 BA Eindhoven (NL)
(72) Inventor: LEURS, Nathalie, D., P., NL-5656 AA Eindhoven (NL)
(74) Representative: Groenendaal, Antonius W. M.
(86) International application number: PCT/IB2003/004570
(87) International publication number: WO 2004/043069

(56) References cited:
- WO-A-02/11440
- US-A1- 2002 075 320
- US-A1- 2002 162 101
- SHETH B D: "A Learning Approach to Personalized Information Filtering" XP002178871 Retrieved from the Internet: <URL: agents.www.media.mit.edu/groups/agents/pub lications/sheth-thesis.pdf> [retrieved on 2001-09-28] page 36, paragraph 4.2.5 -page 39, paragraph 4.3.2

## Description

### Field of the invention

The invention relates to a recommender and a method of providing a recommendation of content therefor and in particular to a recommender suitable for a Private Video Recorder.

### Background of the invention

In recent years, the accessibility to and provision of information and content such as TV programmes, film, music and books, etc. have increased explosively. The information and content may today be provided from many different sources, and the variety and availability of content has increased substantially.

For example, the number of available television channels in most countries has increased substantially in the last decade, and in many countries, viewers can receive tens or even hundreds of different TV channels. The TV channels are further provided from different broadcasters and sources and are communicated through a variety of media including terrestrial radio broadcasts, cable distribution or satellite broadcasts. Similarly, the number of available radio channels has increased explosively and are provided through different media such as satellite broadcasts, digital terrestrial broadcasts, cable distribution or even through the Internet.

As the available content has increased substantially, it has become increasingly difficult for a user to find and select the specific content that he is most interested in. Obtaining information of the total amount of content available and filtering this in order to select a desired content item is a very time-consuming and cumbersome process. In addition to finding the appropriate content item, the user further needs to determine from which source and at which time the desired content item is available.

In order to facilitate content selection, and to filter the available content to provide a suitable selection for a given user, recommenders have been developed, which are able to monitor the available content, and in response to a user profile, recommend content considered specifically suited for the user.

One area where recommenders have been implemented is in Private Video Recorders (PVRs). A typical PVR comprises a hard disk for recording content items such as TV programmes. The PVR further comprises a recommender, which records and recommends TV programmes to the user in accordance with a user profile. The user profile is built up over time to match the user's viewing habits, and the profile is specifically generated from specific user input related to the preference for a given programme as well as from detecting which programmes are selected for viewing by the user of the PVR.

Although conventional recommenders may facilitate content selection and provide recommendations, further improvement of the functionality provided would be advantageous.

For example, as the user profile is built up over a significant time, it tends to become relatively static, and modifications and updates can only gradually be incorporated. Furthermore, the user profile is determined in response to the user's preference for selected programmes. However, as the user typically selects items recommended to him from the content, the update information available for the user profile is typically limited to content already recommended. Thus, the content recommendation will tend to become more and more narrow with only content of a limited range being recommended. This further inhibits dynamic changes and thus results in a static and narrow recommendation being provided to the user.

Hence, a system for an improved recommender would be advantageous, and especially a system providing increased flexibility and/or dynamic performance would be beneficial.

Article "A learning approach to personalized information filtering", by B.D.Sheth, discloses a method for adding a new agent which, initially, is incapable of recommending articles. A user may personalize the new agent by programming, e.g. showing interesting articles or editing an internal state of the agent. The agents can be crossed by exchanging fields between them.

### OBJECT AND SUMMARY OF THE INVENTION

Accordingly, the invention seeks to provide an improved system for a recommender and/or to mitigate, alleviate or eliminate one or more of the above-mentioned disadvantages singly or in any combination.

According to a first aspect of the invention, a method of providing a recommendation of content to a user according to claim 1 is provided.

A user preference profile may thus be updated from a temporary user preference profile. The temporary preference profile may be used to test content items not directly matching the user's current preference profile, thereby allowing an increased flexibility and possibility of improved dynamic performance. Specifically, the temporary user preference profile may allow alternative and/or additional preferences to be tested, and if suitable to be added to the user preference profile. Thus, a widening mechanism may be introduced to the user preference profile, thereby opposing the narrowing effect caused by a limited recommendation of content for preference evaluation. The content items may be, for example, TV programmes, video clips, audio clips, radio programmes, music clips, multimedia clips or any other suitable content items. The content item interest may be determined in response to a user behaviour such as a behaviour related to a selection of content items.

According to a feature of the invention, a number of preference content items associated with the temporary user profile are recommended to the user. Specifically, the suitability of the temporary user profile to the user may be tested by recommending more content items that match the temporary user preference profile. The other content items may thus specifically be content items suggested by the recommender in accordance with the temporary user preference profile. If these content items receive a high user preference, the probability that the user preference profile is updated in response to the temporary user preference profile is increased. The feature thus allows a reliable, easily implementable and easy to use method of testing the suitability of the temporary user preference profile.

According to another feature of the invention, the step of determining if the other content items achieve a high user preference value comprises determining a selection rate of the preference content items. The recommender may specifically determine how often a content item matching the temporary user preference profile is selected, and the selection of the content item may be considered to be a positive preference indication by the user. The selection rate may specifically be determined from how often a matching content item is selected, and/or may be determined in response to how long the content item is selected. Thus, characteristics such as how quickly after selection the user selects another content item may be used in the determination of a user preference. This provides an efficient method for determining a user preference.

According to another feature of the invention, the number of preference content items recommended before deciding whether to modify the user preference profile depends on the selection rate. In particular, the time before a decision is made whether to modify the user preference profile or to delete the temporary user preference profile may depend on the selection rate. Thus, if content items matching the temporary user preference profile are frequently selected, the user preference profile may be updated after relatively few selections. Furthermore, if recommended content items matching the temporary user preference profile are never selected, the temporary user preference profile may be deleted relatively quickly. This allows a dynamic behaviour well suited to the specific temporary user preference profile.

According to another feature of the invention, the step of determining if the other content items achieve a high user preference value comprises determining a user rating of at least some of the preference content items. This allows a simple to implement, yet very accurate user preference determination.

According to another feature of the invention, the number of preference content items recommended before deciding whether to modify the user preference profile depends on the user rating of at least some of the preference content items. Hence, the dynamic behaviour of the modifications to the user preference profile is adapted in response to the probability of the temporary user preference profile being suited for the user.

According to another feature of the invention, the method further comprises the step of modifying the temporary user preference profile in response to the user preference values of the other content items. Hence, this provides for the option of the user directly affecting the temporary user preference profile such that this may be updated and modified to more accurately reflect a user profile for content preferences.

According to another feature of the invention, the modification of the user preference profile is realized by including a user preference profile addition. Specifically, the user preference profile may simply be modified by the temporary user preference profile being added to the current user preference profile. For example, the user preference profile may simply add any preferences for content item categories determined in the temporary user preference profile to the preferences stored in the user preference profile. This provides a simple method of expanding the preferences stored in the user preference profile and thus opposes the inherent narrowing effect of the recommender.

According to another feature of the invention, the user preference profile addition is temporary. Specifically, the modification of the user preference profile may not be permanent but may have a limited duration only. This will allow the user preference profile to adapt to temporary preferences, for example, associated with a temporary availability of a specific category of content. Hence, an improved dynamic performance of the recommender may be achieved.

According to another feature of the invention, a dynamic update characteristic of the user preference profile addition is different from a dynamic update characteristic of the user preference profile. Specifically, the user preference profile may thus comprise different elements having a different dynamic performance. This may allow some preferences to be quickly modified or updated in accordance with a current preference while preserving the accuracy of the long-term preferences. Hence, an overall improved dynamic behaviour may be achieved without sacrificing long-term accuracy.

According to another feature of the invention, the content item interest is detected from a detection of a user selection of a content item. This provides a suitable mechanism for detecting a content item interest.

According to another feature of the invention, the method further comprises the step of recommending the content item for initial selection. Specifically, the temporary user preference profile may be generated from the recommendation and selection of a content item, which does not match the determined user preference profile. This allows the recommender to test non-matching content items, thereby allowing a widening of the content item preferences so that the user preference profile may be updated to include new preferences.

According to another feature of the invention, the recommendation of the content item is in response to an increase of preference values of other users for content items associated with the content item. This allows the preference of other users to be used as an indication that a given content item or category of content items may be applicable to the current user. Hence, it allows the recommender to test if a new popular content item or category of content items will be suitable for the user.

According to another feature of the invention, the method further comprises the step of receiving topic interest information from an external source. Furthermore, the content item interest is detected in response to the topic interest information. This provides a suitable input for suggesting content item that may be suitable for the user.

According to another feature of the invention, the external source comprises at least one source chosen from the group of: newspapers; websites; and broadcast sources. These sources provide suitable and advantageous sources for generating and distributing topic interest information.

According to a different aspect of the invention, there is provided a recommender for providing a recommendation of content to a user and being adapted for modifying a user preference profile indicating a user's preference to content, the user preference profile being usable for providing the recommendation, the recommender comprising:
a recommender processor for retrieving the user preference profile;
using a user interface controller to detect whether the user exhibits an interest in a content item;
wherein the recommender processor is operable to
determine if the content item does not match to the user preference profile; and if so, to
generate a temporary user preference profile with a positive preference for the content item;
recommend other content items that match the temporary user preference profile; and
determine if the other content items associated with the temporary user preference profile achieve high user preference values and only if so, modifying the user preference profile in response to the temporary user preference profile.

### BRIEF DESCRIPTION OF THE DRAWINGS

An embodiment of the invention will be described, by way of example only, with reference to the drawings, in which
FIG. 1 is an illustration of a private video recorder comprising a recommender in accordance with an embodiment of the invention; and
FIG. 2 is an illustration of a method of providing a recommendation of content in accordance with an embodiment of the invention.

### DESCRIPTION OF PREFERRED EMBODIMENTS

The following description focuses on an embodiment of the invention applicable to a Private Video Recorder (PVR) comprising a recommender. However, it will be apparent that the invention is not limited to this application but may be applied to many other applications including recommenders for radio programme content or Internet content.

For clarity and brevity, the description focuses on an embodiment wherein the content item interest is determined in response to a user selection of a content item.

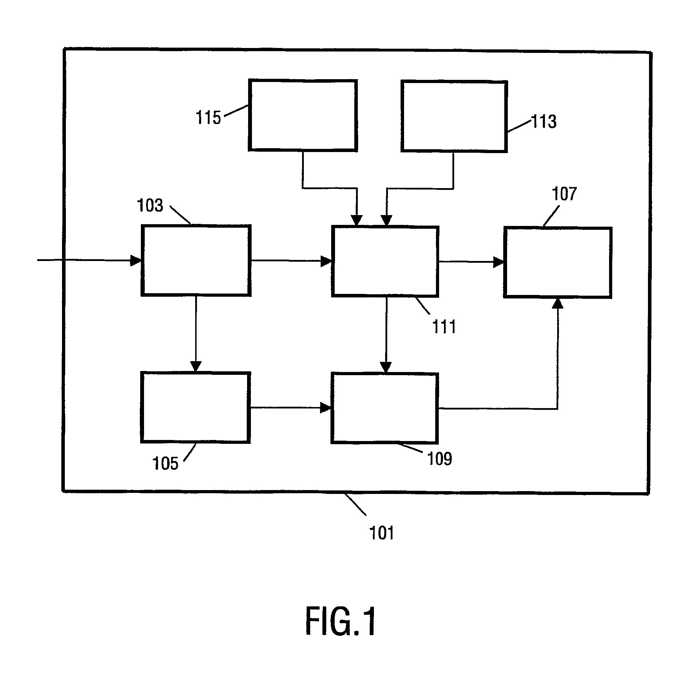

FIG. 1 is an illustration of a private video recorder (PVR) 101 comprising a recommender in accordance with an embodiment of the invention. The PVR 101 comprises a content receiver 103. The content receiver 103 receives content items from one or more suitable content item sources. In the preferred embodiment, the content receiver 103 mainly receives content by way of TV programmes broadcast in a suitable way.

However, in the preferred embodiment, the content receiver is further capable of receiving content from a plurality of various content sources. Thus, the content receiver receives content items in the form of video, audio and multimedia clips and programmes. Specifically, TV programmes are received from terrestrial radio broadcasts as well as from a digital cable connection. Likewise, radio programmes are received from conventional analogue radio transmissions as well as from digital radio broadcasts received through a cable connection. The content receiver capable of receiving a plurality of content items from various sources may simply be implemented as the combination of a plurality of independent content receiver elements, where each element is dedicated to receiving content items of a specific nature from a specific source.

The received content items are converted to suitable digital formats and stored in a content memory 105 together with information associated with the content items. Specifically, a content item may be received directly in a suitable format, such as an MPEG 2 format for a video transmission, and in this case no conversion is required.

The PVR 101 further comprises a user interface 107 for displaying content items, control information and for receiving user input. Specifically, the user interface 107 comprises a display such as e.g. a video monitor or a TV. In the preferred embodiment, the user input is received by using a remote control communicating with the user interface 107. Hence, the user interface is operable to display various information to the user and to receive user input. Specifically, the user interface may display a list of content items, and a user may select one of these through a suitable activation of the remote control.

The PVR additionally comprises a content presenter 109, which is coupled to the content memory 105 and the user interface 107. In response to a selection of a content item, the content presenter 109 is operable to retrieve the stored content from the content memory 105 and present it to the user via the user interface 107.

Furthermore, the PVR 101 comprises a recommender processor 111 coupled to the content receiver 103, the content presenter 109, the user interface 107 and possibly the content memory 105. The recommender processor 111 is operable to generate a user preference profile for a user of the PVR 101.

In the preferred embodiment, the recommender processor 111 detects which content items are presented by the content presenter 109. It furthermore determines a user preference for the content items through a specific user preference indication received through the user interface 107. Additionally or alternatively, the user preference indication may be received through indirect measures. These indirect measures include detection of, for example, how many times a given content item is watched, whether it is watched in full or only partly etc.

When the recommender processor 111 detects that a given content item is presented to the user, it retrieves the associated information from the content memory 105. The user preference is correlated with the information for the content item, and specifically with the category of the content item, in order to derive information of the user's preference for this category of content item. In this way, the recommender processor 111 builds up knowledge of the user's preferences for different categories and types of content. This knowledge is contained in a user preference profile, and the PVR 101 comprises a user preference profile memory 113 for storing the user preference profile. The user preference profile memory 113 is coupled to the recommender processor 111.

In the preferred embodiment, the PVR 101 is further operable to determine a temporary user preference profile. This temporary user preference profile may be stored in a temporary user preference profile memory 115 coupled to the recommender processor 111.

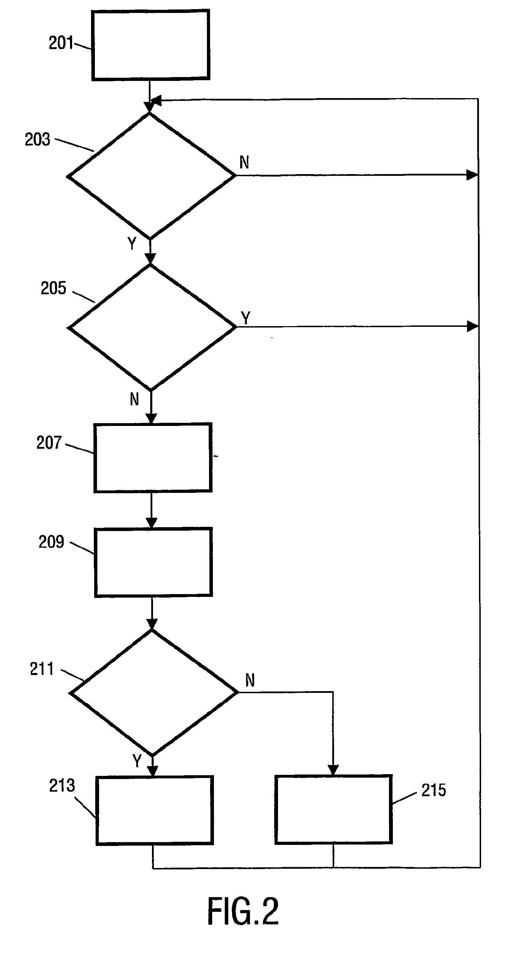

FIG. 2 is an illustration of a method of providing a recommendation of content in accordance with an embodiment of the invention. The method may be applicable to the PVR of FIG. 1, and will hereinafter be described with reference thereto.

In step 201, a user preference profile is determined. In the preferred embodiment, the user preference profile is determined in response to previous user selections. Hence, specifically a user preference profile is generated when the PVR 101 is first initiated and is then stored in the user preference profile memory 113. The user preference profile is continually updated as the PVR is used, and becomes increasingly accurate and specific as more and more information is determined. The determination of the user preference profile of step 201 may comprise the process of generating a new user preference profile. However, in the preferred embodiment, the determination of step 201 comprises the recommender processor 111 determining the user preference profile simply by accessing the information stored in the user preference profile memory 113. Hence, the determination preferably simply consists in retrieving or accessing some or all information of the user preference profile stored in the user preference profile memory 113.

In step 203, it is determined if a new content item has been selected. The step is repeated until a positive detection of a selection occurs. In the preferred embodiment, step 203 is furthermore associated with one or more content items being recommended to the user. Specifically, these content items may comprise a number of content items that match the user's preference profile but will in addition comprise some content items that do not provide a close match to the user's preference profile. These "surprise" suggestions allow content items to be recommended to the user that do not match the current user preference profile, and therefore may be used to modify and update the user preference profile to include new preferences.

When a new content item has been selected, the method continues in step 205 wherein it is detected if the selected content corresponds to the user preference profile and specifically in the preferred embodiment, whether it matches the user's current user preference profile. If the selected content item does match the user preference profile, the content presenter 109 proceeds to present the content item to the user and the method returns to step 203.

If the selected content item does not match the user preference profile, the method continues in step 207 wherein a temporary user preference profile is determined in response to the selected content item. Thus, a new temporary user preference profile is generated, which in the preferred embodiment is initialised with a positive preference value for the one or more of categories to which the content item belongs. Thus, if a user who is not normally interested in sport, and therefore has a low preference value for sport in the user preference profile, selects a content item consisting in a TV programme of, for example, a football match at the Olympic Games, the temporary user preference profile may be started with a positive preference value for the categories of Sport, Football and the Olympic Games.

The method continues in step 209 wherein further information is gathered from other content items to further determine the user preference values for the temporary user preference profile. Specifically, in the preferred embodiment, the temporary user preference profile is tested by a number of other content items belonging to the categories of the temporary user preference profile. The user preference values for these other content items are determined and used to determine how suitable the temporary user preference profile is for the user. In addition, the temporary user preference profile is preferably updated and modified in accordance with the determined preference values.

As a specific example, following the selection of the Olympic football match, the recommender processor 111 may recommend, through the user interface 107, a number of sports programmes including, for example, another Olympic football match, a domestic football match and an Olympic Athletics event such as a 100 m sprint. User preference values are determined for these recommendations, and specifically a positive value is associated with the content items that are selected, whereas a negative value is associated with content items that are not selected.

Hence, if the user selects none of the recommended clips, a low overall preference value is achieved by the temporary user preference profile. If all of the recommended clips are selected, a high overall preference value is achieved by the temporary user preference profile. If only some of the clips are selected, the temporary user preference profile is updated accordingly in the preferred embodiment. Hence, if the user selects content items related to two other Olympic events, the temporary user preference profile is changed to reflect a high preference for the Olympic category but a lower preference for the category of football matches. In this way, the temporary user preference profile is further modified to more accurately reflect the new preference of the user.

In the preferred embodiment, many other approaches for determining a preference value are used in addition to the method described above. Specifically, the user interface 107 may receive explicit preference indications from the user and communicate these to the recommender processor 111, which will modify and update the temporary user preference profile accordingly. Additionally or alternatively, other user behaviour may be used as information for determining the preference values including determining how quickly a user moves on to another content item, whether he samples topics from other sources by selecting these sources for short durations and how long the user selects a given content item.

Hence, in the preferred embodiment, the temporary user preference profile is further refined and tested in step 209 by recommending a number of preference content items associated with the temporary user profile.

Step 209 is followed by step 211 wherein it is determined if the temporary user preference profile has achieved high user preference values. If high preference values are achieved, the method continues in step 213 by modifying the user preference profile in response to the temporary user profile. If high preference values are not achieved, the method continues in step 215 by deleting the user preference profile.

In the preferred embodiment, the duration and/or number of other content items recommended or selected before a decision is made on whether to delete the temporary user preference profile or to update the user preference profile depends on the preference values obtained. Specifically, the number of preference content items recommended before deciding whether to modify the user preference profile depends on the selection rate or a user rating of at least some of the preference content items. Hence, if most of the content items recommended in accordance with the temporary user preference profile are selected, and are given high user ratings, the user preference profile is modified very soon. However, if none or only a few of the content items recommended in accordance with the temporary user preference profile are selected, and these are given low user ratings, the user preference profile will soon be deleted. In contrast, if the results are less conclusive, for example, because a relatively high number of other content items are selected but these are given low user ratings, the test duration is extended and more content items matching the temporary user preference profile are recommended in order to further test the temporary user preference profile.

In the preferred embodiment, the modification of the user preference profile is by including a user preference profile addition. Thus the original user preference profile is augmented by including of the information from the temporary user preference profile. Specifically, the user preference profile may be modified by the categories of the temporary user preference profile having high preference values being added to the user preference profile. Thus, in the specific example, if the temporary user preference profile indicates that the content item category relating to the Olympic Games has a high preference value, this category is added to the user preference profile.

In some embodiments, the user preference profile addition may be temporary. Thus the temporary user preference profile is not necessarily integrated with the user preference profile but may be a separable addendum that can be deleted at a later date. Hence, this allows a temporary interest or preference to be taken into account and used by the recommender without causing a lasting change to the user preference profile. For example, the user preference profile may be updated by the including of a high preference for content item related to the Olympic Games. However, when the Olympic Games finish, this category may be deleted.

In the preferred embodiment, a dynamic update characteristic of the user preference profile addition is different from a dynamic update characteristic of the user preference profile. Thus, in this embodiment, the update rate and modification rate for the user preference profile is typically significantly slower than for the user preference profile addition. Therefore, it will require a more significant and substantial change of behaviour to modify the user preference profile, whereas the user preference profile addition will be updated and modified by much fewer preference value inputs. For example, the user preference profile may have been built up over years of monitoring user behaviour, and will therefore very accurately reflect the user's average preferences. In order to retain this information and accuracy, very significant preference values for a high number of content items are required for a substantial change to be made to the user preference profile. However, the user preference profile addition may have been based on only a few days or weeks information, and therefore reflect current deviations from the average preferences of the user. In order to follow the variations of the user's preferences, much fewer content items are required for significant changes to be made to the user preference profile addition.

In the specific example, a user may not be interested in sports in general but be interested in following current Olympic Games. The described embodiment will allow the exception to the average low preference for sport to be detected, and will result in a temporary user preference profile and consequent user preference profile addition. Hence, within perhaps a few days, the recommender will have detected and updated the recommendations to include content items related to the Olympic Games. When the Olympic Games finish, no content items in this category will be selected, and due to the high update rate of the user preference profile addition, the preference value for sports events is quickly returned to the normal levels. Hence, the short-term preference variations may be tracked without impact on the long-term average preference profile.

It will be appreciated that any content item interest not closely matching the user preference profile may be used to initiate the temporary user preference profile in the preferred embodiment. However, preferably a recommendation of one or more content items is made in response to an increase of preference values of other users for content items associated with these content items. Hence, the behaviour of other users is preferably used to recommend content items to the user which may result in a temporary user preference profile. Specifically, currently popular content items and categories of content items may be determined and detected and used to provide recommendations to the user. For example, it may be detected that there is a general increase in selection and preference values for sports events and that these specifically relate to recently begun Olympic Games. In response, content items related to the Olympic Games may initially be recommended to the user, and if selected, a temporary user preference profile may be initiated in response.

It will be apparent that some communication of information related to the behaviour of other users is required. This may be provided in any suitable way and specifically it may be included as data in the received broadcast transmissions. Likewise, any suitable method for detecting the behaviour and preference values of different users may be used. In some embodiments, a number of PVRs may be connected to a central communication unit, which receives and processes selection information in order to generate the information of the behaviour of a plurality of users.

Additionally or alternatively, the recommender may receive information related to content item interests from an external source. For example, the recommender may directly receive information of topics that are generally of interest to many users. This information may be direct such as information specifically generated for the purpose by a central unit. The user of the PVR may thus have a subscription entitling him to receive information related to content items, including topic interest information indicating e.g. issues or events of current high general interest. In other embodiments, the topic interest information may be more indirect and may be derived by the recommender from indirect information. This may include information from e.g. newspapers where the headlines can be analysed to provide indications of topics of current high general interest. Alternatively or additionally, one or more websites may be accessed and analysed for indications of high interest topics. In some embodiments, topic interest information may be comprised in or derived from a broadcast. Specifically, the information may be included as data embedded in the content item broadcast signals.

The invention can be implemented in any suitable form including hardware, software, firmware or any combination of them. However, the invention is preferably implemented as computer software running on one or more data processors and/or digital signal processors. The elements and components of an embodiment of the invention may be physically, functionally and logically implemented in any suitable way. Indeed, the functionality may be implemented in a single unit, in a plurality of units or as part of other functional units. As such, the invention may be implemented in a single unit or may be physically and functionally distributed between different units and processors.

Although the present invention has been described in connection with the preferred embodiment, it is not intended to be limited to the specific form set forth herein. Rather, the scope of the present invention is limited only by the accompanying claims.

## Claims

1. A method of modifying a user preference profile indicating a user's preference to content, the user preference profile being usable for providing a recommendation of content to a user the method comprising the steps of:
retrieving (201) the user preference profile;
detecting (203) if the user exhibits an interest in a content item;
determining (205) if the content item does not match to the user preference profile; and if so
generating (207) a temporary user preference profile with a positive preference for the content item;
recommending other content items that match the temporary user preference profile;
determining (209) if the other content items achieve high user preference values and only if so, modifying (213) the user preference profile in response to the temporary user preference profile.

2. A method as claimed in claim 1, wherein a number of preference content items associated with the temporary user profile are recommended to the user.

3. A method as claimed in claim 2, wherein the step of determining (209) if the other content items achieve a high user preference value comprises determining a selection rate of the preference content items.

4. A method as claimed in claim 3, wherein the number of preference content items recommended before deciding whether to modify the user preference profile depends on the selection rate.

5. A method as claimed in claim 2, wherein the step of determining (209) if the other content items achieve a high user preference value comprises determining a user rating of at least some of the preference content items.

6. A method as claimed in claim 5, wherein the number of preference content items recommended before deciding whether to modify the user preference profile depends on the user rating of at least some of the preference content items.

7. A method as claimed in claim 1, further comprising the step of modifying the temporary user preference profile in response to the user preference values of the other content items.

8. A method as claimed in claim 1, wherein the modification (213) of the user preference profile is realized by including a user preference profile addition.

9. A method as claimed in claim 8, wherein the user preference profile addition is temporary.

10. A method as claimed in claim 8, wherein a dynamic update characteristic of the user preference profile addition is different from a dynamic update characteristic of the user preference profile.

11. A method as claimed in claim 1, wherein the content item interest is detected from a detection of a user selection of a content item.

12. A method as claimed in claim 11, further comprising the step of recommending the content item for initial selection.

13. A method as claimed in claim 12, wherein the recommendation of the content item is in response to an increase of preference values of other users for content items associated with the content item.

14. A method as claimed in claim 1, further comprising the step of receiving topic interest information from an external source and wherein the content item interest is detected in response to the topic interest information.

15. A method as claimed in claim 13, wherein the external source comprises at least one source chosen from the group of:
a. newspapers;
b. websites; and
c. broadcast sources.

16. A computer program enabling a method to be carried out according to any one of the preceding claims.

17. A recommender for providing a recommendation of content to a user and being adapted for modifying a user preference profile indicating a user's preference to content, the user preference profile being usable for providing the recommendation, the recommender comprising:
a recommender processor (111) for retrieving the user preference profile;
using a user interface controller (107) to detect whether the user exhibits an interest in a content item;
wherein the recommender processor (111) is operable to
determine if the content item does not match to the user preference profile; and if so, to
generate a temporary user preference profile with a positive preference for the content item;
recommend other content items that match the temporary user preference profile; and
determine if the other content items associated with the temporary user preference profile achieve high user preference values and only if so, modifying the user preference profile in response to the temporary user preference profile.

18. A private video recorder (101) comprising a recommender as claimed in claim 17.

## Patentansprüche

1. Verfahren zum Modifizieren eines Benutzervorzugsprofils, das den Vorzug für Inhalt angibt, wobei dieses Benutzervorzugsprofil zum Liefern einer Empfehlung von Inhalt an einen Benutzer nutzbar ist, wobei dieses Verfahren die nachfolgenden Verfahrensschritte umfasst:
- das Erfassen (201) des Benutzervorzugsprofils;
- das Detektieren (203), ob der Benutzer Interesse an einem Inhaltsitem zeigt,
- das Ermitteln (205), ob das Inhaltsitem nicht mit dem Benutzervorzugsprofil übereinstimmt; und sollte dies der Fall sein,
- das Erzeugen (207) eines einstweiligen Benutzervorzugsprofils mit einem positiven Vorzug für das Inhaltsitem;
- das Empfehlen anderer Inhaltsitems, die mit dem einstweiligen Benutzervorzugsprofil übereinstimmen;
- das Ermitteln (209), ob die anderen Inhaltsitems hohe Benutzervorzugswerte erzielen und nur in dem Fall, dass dies stimmt, das Modifizieren (213) des Benutzervorzugsprofils in Reaktion auf das einstweilige Benutzervorzugsprofil.

2. Verfahren nach Anspruch 1, wobei dem Benutzer eine Anzahl mit dem einstweiligen Benutzerprofil assoziierter Vorzugsinhaltsitems empfohlen werden.

3. Verfahren nach Anspruch 2, wobei der Verfahrensschritt der Ermittlung (209), ob die anderen Inhaltsitems einen hohen Benutzervorzugswert erreichen, das Ermitteln einer Selektionsrate der Vorzugsinhaltsitems umfasst.

4. Verfahren nach Anspruch 3, wobei die Anzahl Vorzugsinhaltsitems, die empfohlen wurden, bevor entschieden wurde, ob das Benutzervorzugsprofil geändert werden soll, von der Selektionsrate abhängig ist.

5. Verfahren nach Anspruch 2, wobei der Verfahrensschritt der Ermittlung (209), ob die anderen Inhaltsitems einen hohen Benutzervorzugswert erreichen, das Ermitteln einer Benutzerbewertung wenigstens einiger der Vorzugsinhaltsitems umfasst.

6. Verfahren nach Anspruch 5, wobei die Anzahl Vorzugsinhaltsitems, die empfohlen wurden, bevor entschieden wurde, ob das Benutzervorzugsprofil modifiziert werden soll, von der Benutzerbewertung wenigstens einiger der Vorzugsinhaltsitems abhängig ist.

7. Verfahren nach Anspruch 1, wobei dieses Verfahren weiterhin den Verfahrensschritt der Modifizierung des einstweiligen Benutzervorzugsprofils umfasst, und zwar in Reaktion auf die Benutzervorzugswerte der anderen Inhaltsitems.

8. Verfahren nach Anspruch 1, wobei die Modifikation des Benutzervorzugsprofils durch Einschließung einer Benutzervorzugsprofilergänzung verwirklicht wird.

9. Verfahren nach Anspruch 8, wobei die Benutzervorzugsprofilergänzung einstweilig ist.

10. Verfahren nach Anspruch 8, wobei eine dynamische Aktualisierungscharakteristik der Benutzervorzugsprofilergänzung von einer dynamischen Aktualisierungscharakteristik des Benutzervorzugsprofils abweicht.

11. Verfahren nach Anspruch 1, wobei das Inhaltsiteminteresse aus einer Detektion einer Benutzerselektion eines Inhaltsitems detektiert wird.

12. Verfahren nach Anspruch 11, wobei dieses Verfahren weiterhin den Verfahrensschritt der Empfehlung des Inhaltsitems zur Erstselektion umfasst.

13. Verfahren nach Anspruch 12, wobei die Empfehlung des Inhaltsitems in Reaktion auf eine Steigerung der Vorzugswerte anderer Benutzer für mit dem betreffenden Inhaltsitem assoziierte Inhaltsitems erfolgt.

14. Verfahren nach Anspruch 1, wobei dieses Verfahren weiterhin den nachfolgenden Verfahrensschritt umfasst: das Empfangen sachgemäßer Interesseninformation von einer externen Quelle und wobei das Interesse an dem Inhaltsitem in Reaktion auf die sachgemäße Interesseninformation detektiert wird.

15. Verfahren nach Anspruch 13, wobei die externe Quelle wenigstens eine aus der nachfolgenden Gruppe gewählte Quelle aufweist:
a. Zeitungen;
b. Websites; und
c. Rundfunkquellen.

16. Computerprogramm, das es ermöglicht, dass ein Verfahren nach einem der vorstehenden Ansprüche durchgeführt wird.

17. Empfehlungsanordnung zum Liefern einer Empfehlung von Inhalt an einen Benutzer, die dazu vorgesehen ist, ein Benutzervorzugsprofil, das den Benutzervorzug für Inhalt angibt, zu modifizieren, wobei das Benutzervorzugsprofil zum Liefern einer Empfehlung von Inhalt an einen Benutzer nutzbar ist, wobei diese Empfehlungsanordnung Folgendes umfasst:
- einen Empfehlungsprozessor (111) zum Erfassen des Benutzervorzugsprofils;
wobei ein Benutzerschnittstellencontroller (107) verwendet wird, und zwar zum Detektieren, ob der Benutzer Interesse an einem Inhaltsitem zeigt,
wobei der Empfehlungsprozessor (111) wirksam ist
- zum Ermitteln, ob das Inhaltsitem nicht mit dem Benutzervorzugsprofil übereinstimmt; und sollte dies der Fall sein,
- zum Erzeugen eines einstweiligen Benutzervorzugsprofils mit einem positiven Vorzug für das Inhaltsitem;
- zum Empfehlen anderer Inhaltsitems, die mit dem einstweiligen Benutzervorzugsprofil übereinstimmen; und
- zum Ermitteln, ob die anderen mit dem einstweiligen Benutzervorzugsprofil assoziierten Inhaltsitems hohe Benutzervorzugswerte erzielen und nur in dem Fall, dass dies stimmt, das Modifizieren des Benutzervorzugsprofils in Reaktion auf das einstweilige Benutzervorzugsprofil.

18. Persönlicher Videorecorder (101) mit einer Empfehlungsanordnung nach Anspruch 17.

## Revendications

1. Procédé de modification d'un profil de préférence utilisateur qui indique une préférence de l'utilisateur pour le contenu, le profil de préférence utilisateur étant utilisable pour fournir une recommandation du contenu à un utilisateur, le procédé comprenant les étapes suivantes consistant à :
récupérer (201) le profil de préférence utilisateur ;
détecter (203) si l'utilisateur présente un intérêt dans un élément de contenu ;
déterminer (205) si l'élément de contenu ne correspond pas au profil de préférence utilisateur ; et, le cas échéant,
générer (207) un profil de préférence utilisateur temporaire avec une préférence positive pour l'élément de contenu ;
recommander d'autres éléments de contenu qui correspondent au profil de préférence utilisateur temporaire ; et
déterminer (209) si les autres éléments de contenu réalisent des valeurs de préférence utilisateur élevées et seulement dans ce cas, à modifier (213) le profil de préférence utilisateur en réponse au profil de préférence utilisateur temporaire.

2. Procédé selon la revendication 1, dans lequel un certain nombre d'éléments de contenu de préférence qui sont associés au profil utilisateur temporaire est recommandé à l'utilisateur.

3. Procédé selon la revendication 2, dans lequel l'étape consistant à déterminer (209) si les autres éléments de contenu réalisent une valeur de préférence utilisateur élevée comprend la détermination d'un taux de sélection des éléments de contenu de préférence.

4. Procédé selon la revendication 3, dans lequel le nombre d'éléments de contenu de préférence qui sont recommandés avant de décider de modifier le profil de préférence utilisateur dépend du taux de sélection.

5. Procédé selon la revendication 2, dans lequel l'étape consistant à déterminer (209) si les autres éléments de contenu réalisent une valeur de préférence utilisateur élevée comprend la détermination d'une évaluation de l'utilisateur d'au moins quelques-uns des éléments de contenu de préférence.

6. Procédé selon la revendication 5, dans lequel le nombre d'éléments de contenu de préférence qui sont recommandés avant de décider de modifier le profil de préférence utilisateur dépend de l'évaluation de l'utilisateur d'au moins quelques-uns des éléments de contenu de préférence.

7. Procédé selon la revendication 1, comprenant en outre l'étape consistant à modifier le profil de préférence utilisateur temporaire en réponse aux valeurs de préférence utilisateur des autres éléments de contenu.

8. Procédé selon la revendication 1, dans lequel on effectue la modification (213) du profil de préférence utilisateur en incluant une addition du profil de préférence utilisateur.

9. Procédé selon la revendication 8, dans lequel l'addition du profil de préférence utilisateur est temporaire.

10. Procédé selon la revendication 8, dans lequel une caractéristique de mise à jour dynamique de l'addition du profil de préférence utilisateur est différente d'une caractéristique de mise à jour dynamique du profil de préférence utilisateur.

11. Procédé selon la revendication 1, dans lequel l'intérêt de l'élément de contenu est détecté à partir d'une détection d'une sélection utilisateur d'un élément de contenu.

12. Procédé selon la revendication 11, comprenant en outre l'étape consistant à recommander l'élément de contenu pour une sélection initiale.

13. Procédé selon la revendication 12, dans lequel la recommandation de l'élément de contenu est en réponse à une augmentation de valeurs de préférence d'autres utilisateurs pour les éléments de contenu qui sont associés à l'élément de contenu.

14. Procédé selon la revendication 1, comprenant en outre l'étape consistant à recevoir de l'information d'intérêt topique en provenance d'une source externe et dans lequel l'intérêt de l'élément de contenu est détecté en réponse à l'information d'intérêt topique.

15. Procédé selon la revendication 13, dans lequel la source externe comprend au moins une source qui est choisie parmi le groupe constitué de :
a. journaux ;
b. sites Web ; et
c. sources de diffusion.

16. Programme informatique permettant la mise en oeuvre d'un procédé selon l'une quelconque des revendications précédentes 1 à 15.

17. Système de recommandation pour fournir une recommandation du contenu à un utilisateur et étant adapté de manière à modifier un profil de préférence utilisateur qui indique une préférence de l'utilisateur pour le contenu, le profil de préférence utilisateur étant utilisable pour fournir la recommandation, le système de recommandation comprenant ce qui suit :
un processeur de système de recommandation (111) pour récupérer le profil de préférence utilisateur ;
l'utilisation d'un contrôleur d'interface utilisateur (107) pour détecter si l'utilisateur présente un intérêt dans un élément de contenu ;
dans lequel le processeur de système de recommandation (111) est utilisable pour :
déterminer si l'élément de contenu ne correspond pas au profil de préférence utilisateur ; et, le cas échéant, pour
générer un profil de préférence utilisateur temporaire avec une préférence positive pour l'élément de contenu ;
recommander d'autres éléments de contenu qui correspondent au profil de préférence utilisateur temporaire ; et
déterminer si les autres éléments de contenu qui sont associés au profil de préférence utilisateur temporaire réalisent des valeurs de préférence utilisateur élevées et seulement dans ce cas, pour modifier le profil de préférence utilisateur en réponse au profil de préférence utilisateur temporaire.

18. Enregistreur vidéo privé (101) comprenant un système de recommandation selon la revendication 17.
